# EUROPÄISCHE PATENTANMELDUNG

(11) **EP 2 708 414 A2**
(43) Veröffentlichungstag der Anmeldung: **19.03.2014**
(21) Anmeldenummer: 13184358.3
(22) Anmeldetag: 13.09.2013
(51) Int. Cl.: B60P 3/00

(54) **Ladungssicherungs-Anordnung in einem Innenlader-Transportfahrzeug und entsprechendes Verfahren zur Ladungssicherheit**

(30) Priorität: 13.09.2012 DE 102012108557
(71) Anmelder: OZV GmbH & Co. KG, 52146 Würselen (DE)
(72) Erfinder: Offergeld, Johannes, 52066 Aachen (DE)
(74) Vertreter: Braun-Dullaeus, Karl-Ulrich

(57) **Zusammenfassung**

Ladungssicherungs-Anordnung in einem Innenlader-Transportfahrzeug (1) zum Sichern aufrecht in in einem L-Gestell (2) stehender Glasscheiben (5, 5a, 5b) gegen beim Transport auftretende Querkräfte (F), umfassend zumindest ein seitlich im Innenlader-Transportfahrzeug (1) angeordnetes und schwenkbeweglich gelagertes Andruckelement (13), welches zwischen einer Nullstellung und einer Maximal-Stützstellung beweglich vorgesehen ist, wobei alle schwenkbeweglich gelagerten Andruckelemente (13) auf derselben Seite des Innenlader-Transportfahrzeugs (1) angeordnet sind und dass an der dem Andruckelement (13) entgegen gesetzten Seite des Innenlader-Transportfahrzeugs (1) zwischen dem L-Gestell (2) und einer Seitenwand (14, 20) des Innenlader-Transportfahrzeugs (1) ein Stützelement (16) angeordnet ist.

## Beschreibung

Die Erfindung betrifft eine Ladungssicherungs-Anordnung in einem Innenlader-Transportfahrzeug zum Sichern aufrecht in einem L-Gestell stehender Glasscheiben gegen beim Transport auftretende Querkräfte, umfassend zumindest ein seitlich im Innenlader angeordnetes und schwenkbeweglich gelagertes Andruckelement, welches zwischen einer Nullstellung und einer Maximal-Stützstellung beweglich vorgesehen ist. Des Weiteren betrifft die Erfindung ein Innenlader-Transportfahrzeug mit einer demgemäßen Ladungssicherungs-Anordnung, sowie ein Verfahren zur Ladungssicherung in einem Innenlader-Transportfahrzeug, wobei das Innenlader-Transportfahrzeug unter ein mit aufrecht stehenden Glasscheiben beladenes L-Gestell fährt und dieses anhebt, wobei ein seitlich im Innenlader angeordnetes und schwenkbeweglich gelagertes Andruckelement, welches zwischen einer Nullstellung und einer Maximal-Stützstellung beweglich vorgesehen ist, seitlich gegen die Glasscheiben gefahren und an der äußeren Glasscheibe des L-Gestells in Anlage gebracht wird.

Große Glasscheiben können sich auf eine Länge von über 6m erstrecken und auch in der Höhe mehrere Meter erreichen. Um große Glasscheiben sicher transportieren zu können, werden sie auf ein Traggestell gestellt, in dem sie leicht geneigt, aber im wesentlichen aufrecht stehend angeordnet sind. Traggestelle weisen rechteckige Böcke auf, die eine Auflagefläche bilden, auf der die zu transportierenden Glasscheiben nebeneinander gestellt werden. An der Auflagefläche steht eine Anlagefläche hoch, die im wesentlichen aus vertikal verlaufenden Riegeln besteht, die von einem A-förmigen Ständerwerk getragen werden. Sie dient zur seitlichen Anlage der innen im Gestell stehenden Glasscheibe, an der sich dann die weiteren Glasscheiben abstützen.

Allgemein werden zwei Gestellformen verwendet. Das sogenannte A-Gestell ist symmetrisch aufgebaut und verfügt über beidseitige Auflageflächen, die jeweils seitlich an den Schenkeln des A-förmigen Ständerwerks abstehen. Die zwei Auflageflächen ermöglichen eine beidseitige Bestückung des Gestells und damit eine gleichmäßige Gewichtsverteilung der zu ladenden Glasscheiben. Die gleichmäßige Gewichtsverteilung ist erforderlich, um ein seitliches Kippen des beladenen Gestells zu verhindern, wenn es per Kran in ein Transportfahrzeug, beispielsweise einen Bahnwagon oder einen Tieflader, gehoben wird.

Seit dem Aufkommen von Transportfahrzeugen in Form von bodenabsenkbaren Innenlader werden vermehrt L-förmige Tragestelle, sogenannte L-Gestelle, zum Glastransport eingesetzt. Das L-Gestell weist nur eine, seitlich angeordnete Anlagefläche auf. Der die Rückseite bildende Schenkel des A-förmige Ständerwerks des L-Gestells muss nicht bis zur oberen Kante des Gestells reichen, da er nicht als Anlagefläche dient. In Folge ist das A-förmige Ständerwerk im Vergleich mit dem A-Gestell schmaler und die Auflagefläche des L-Gestells entsprechend größer ausgebildet, wodurch das L-Gestell mehr Scheiben laden kann. Die Verwendung von L-Gestellen hilft also Gewicht zu reduzieren und eine größere Auflagefläche zu nutzen, womit eine beträchtliche Kostenersparnis einhergeht.

Innenlader können L-Gestelle aufnehmen, da sie nicht von oben beladen werden, sondern das zu transportierende Gestell bodennah in Längsrichtung des Fahrzeugs aufnehmen. Damit spielt es nur eine untergeordnete Rolle, ob das Gewicht der Glasscheiben gleichmäßig auf dem Gestell verteilt ist. Die Innenlader verfügen über eine insgesamt U-förmige, nach unten offene Ladefläche, die an der Rückfront des Innenladers durch eine Hecktür verschlossen wird. Zur Ladungsaufnahme wird die Hecktür geöffnet und die Ladefläche des Innenladers mittels Absenkung der Luftfederung und der Hubschwinge des Königszapfens tiefer gelegt. Dadurch wird eine seitlich entlang der Ladefläche verlaufende Ladeschiene so weit abgesenkt, dass sie bei einem am Boden stehenden Gestell unter dort vorgesehene korrespondierende Schienen greifen kann. Fährt nun der Innenlader über das Gestell, schieben sich die Ladeschienen des Innenladers unter die Schienen des Gestells.

Ein Wieder-Anheben des Innenladers in seine Fahrposition führt dazu, dass in einem ersten Schritt die Ladeschienen zur Anlage an den Schienen des Gestells kommen. Beim weiteren Anheben wird das nun auf den Ladeschienen aufliegende Gestell mit angehoben. Ist die Fahrposition des Innenladers wieder erreicht, befindet sich auch das Gestell in einem für den Transport ausreichendem Abstand zum Boden. Wird jetzt die Hecktür verschlossen, ist das Gestell mit seinen Glasscheiben vollständig in den Innenlader aufgenommen. Mit der Aufnahme geht aber keine Sicherung der Ladung einher, sie muss separat erfolgen.

Der Großglastransport stellt schon aufgrund des hohen Gewichts des zu transportierenden Materials besondere Anforderungen an die Ladungssicherung. Die Ladung des Innenladers muss vor allem gegen Querkräfte gesichert werden, wie sie beispielsweise bei einem Fahrtrichtungswechsel auftreten können. Eine während des Transports auftretende Relativbewegungen zwischen den geladenen Scheiben und dem Innenlader muss verhindert werden, sie kann unkontrollierbare Fahrzuständen zur Folge haben. Darüber hinaus kann ein Kippen zu einer Fehlbelastung und damit zum Bruch einer Scheibe führen. Zusätzlich muss die Ladungssicherung variabel genug sein, um unabhängig von der Anzahl und den unterschiedlichen Maßen der zu transportierenden Scheiben diese stets sicher fixieren zu können.

Um die geforderte Sicherung gegen Querkräfte zu gewährleisten, wird das im Innenlader aufgenommene Gestell zusammen mit den Glasscheiben zwischen Andruckplatten festgeklemmt, die jeweils an einer Längsseite der Ladefläche angelenkt sind. Bei einem L-Gestell liegen die Andruckplatten der einen Seite an der äußeren der auf der Auflagefläche stehenden Glasscheiben und die Andruckplatte der anderen Seite an der den Glasscheiben abgewandte Rückseite des A-förmigen Ständerwerks an. Dazu vergleichsweise liegen bei einem beidseitig mit Glasscheiben beladenen A-Gestell die Andruckflächen an der jeweils äußeren Glasscheibe der beiden Auflageflächen an.

Die Andruckplatten befinden sich beim Beladen in einer Position, in der sie sich nahe der Seitenwand befinden und so den Laderaum zum Beladen freigeben. Nach abgeschlossenem Ladevorgang werden sie auf der einen Seite des Innenladers gegen die Rückseite der Anlagefläche und auf der anderen Seite gegen die äußere der auf dem Gestell aufrecht stehenden Glasscheibe geführt und dort anpresst. Gestell und Ladung werden gemeinsam durch die von beiden Seiten unter Druck anliegenden Andruckplatten in Position gehalten.

Jede dieser Andruckplatten ist an einen Arm befestigt, über den sie an ihrer Seite des Innenladers schwenkbeweglich gelagert ist. Die schwenkbeweglichen Arme können pneumatisch, hydraulisch oder elektrisch angetrieben werden. Sind sie als statisches System ausgelegt, werden sie nach Fixierung der Ladung über mechanische Sperren oder Absperrventile blockiert, so dass ihre Position gehalten wird. Teilweise arbeiten sie auch dynamisch, dass heißt die Motoren der Andrucksysteme bleiben auch während des Transports aktiv und regeln nach.

Einen besonders gut beweglichen Arm zeigt die DE 20 2009 004 850 U1. Mit seinem großen Verstellbereich verfügt er über eine Variabilität, die es ihm ermöglicht, L- und A-Gestelle sowohl im vollbeladenen wie auch im teilbeladenen Zustand sichern zu können. Wird ein Innenlader statt mit normalbeweglichen Armen sogar beidseitig mit den hochvariablen Armen ausgerüstet, können L-Blöcke richtungsunabhängig gesichert werden. Dann spielt es keine Rolle, in welcher Richtung das L-Gestell in den Innenlader aufgenommen wurde, also ob die Glasscheiben von der Anlagefläche abstehend rechts oder links zur Fahrtrichtung angeordnet sind. Die Verfügbarkeit zweier sich um 180 Grad unterscheidenden Aufnahmerichtungen erleichtern die Aufnahme der L-Gestelle, da das oft umständliche Rangieren des Innenladers in eine Ladeposition verringert werden kann.

Wie erläutert, ist eine Ladungssicherung für Großglastransporte zwingend erforderlich. Die beschriebene Form der Ladungssicherung bieten viele Vorteile, so dass sie sich allgemein durchsetzten konnte. Vor allem sind sie variabel genug, um nicht nur alle Gestellformen, sondern diese auch noch unabhängig von ihrem jeweiligen Beladungsstand sichern zu können. Sie haben aber auch deutliche Nachteil. Ihre Komplexität bedeutet insbesondere hohe Anschaffungskosten und nicht unbeträchtlichen Wartungsaufwand.

Aufgabe der Erfindung ist es, eine Ladungssicherung für einen Innenlader, ein Verfahren zur Ladungssicherung und einen Innenlader mit Ladungssicherung vorzuschlagen, welche die beschriebenen Nachteile zumindest minimiert.

Diese Aufgaben werden gelöst durch eine Ladungssicherungs-Anordnung in einem Innenlader-Transportfahrzeug mit den Merkmalen der Ansprüche 1, einem Innenlader-Transportfahrzeug mit einer erfindungsgemäßen Ladungssicherungs-Anordnung gemäß Anspruch 13, sowie einem Verfahren zur Ladungssicherung in einem Innenlader-Transportfahrzeug mit den Merkmalen des Anspruchs 14. Besonders vorteilhafte Ausgestaltungen der Erfindung werden in den Unteransprüchen genannt.

Die erfindungsgemäße Ladungssicherungs-Anordnung zeichnet sich dadurch aus, dass alle schwenkbeweglich gelagerten Andruckelemente auf derselben Seite des Innenlader-Transportfahrzeugs angeordnet sind und dass an der dem Andruckelement entgegen gesetzten Seite des L-Gestells zwischen dem L-Gestell und einer Seitenwand des Innenlader-Transportfahrzeugs ein Stützelement angeordnet ist.

Ein erfindungswesentlicher Grundgedanke ist es somit, die Komplexität der Ladungssicherung durch einen Teüverzicht auf die schwenkbeweglich gelagerten Andruckelemente zu verringern. Die erfindungsgemäße Ladungssicherungs-Anordnung kann auf der den Andruck-Elementen gegenüberliegenden Seite des Laderaums auf Andruck-Elemente verzichten. Stattdessen wird das L-Gestell an dieser Seite über ein einfaches Stützelement gegen Querkräfte gesichert.

Allerdings ist dieser Teilverzicht nur möglich, wenn auf die Eignung der Ladungssicherung für alle Gestellformen und Gestellausrichtungen verzichtet wird. Sind die schwenkbeweglich gelagerten Andruckelemente alle auf einer Längsseite des Innenladers angelenkt, bestimmt dies die Ausrichtung, mit denen die L-Gestelle in den Innenladers aufgenommen werden können.

Während die Rückseite der Anlagefläche des L-Gestells sich immer an der selben Position, je nach Ausrichtung des Gestells an der rechten oder linken Seitenwand des Innenladers, befindet, ist die Position der äußeren auf der Auflagefläche stehenden Glasscheiben von der Anzahl und Stärke der übrigen auf dem Gestell stehenden Glasscheiben abhängig. Das Abstützen dieser Seite der Ladung erfordert daher eine hohe Variabilität. Auf der dem Ständerwerk entgegen gesetzten Seite wird die Sicherung der geladenen Glasscheiben durch die auf der selben Seite angeordneten und schwenkbeweglich gelagerten Andruckelemente gewährleistet. Hierzu wird das Andruckelement mit seiner beweglich gelagerten Andruckplatte gegen die äußere der Glasscheiben gefahren und dort unter Druck angelegt.

Hingegen ist für die immer in der selben Position befindliche Rückseite des zumindest im wesentlichen A-förmigen Ständerwerks keine variable Abstützung erforderlich. Hier reicht es stattdessen vollkommen aus, ein einfaches Stützelement vorzusehen, welches am A-förmigen Ständerwerk befestigt wird und dieses mit einer Seitenwand bzw. dem Radkasten des Innenlader-Transportfahrzeugs verbindet. Während das gegen die äußere der auf dem L-Gestell stehenden Glasscheibe geführte Andruckelement das L-Gestell zur einen Seite hin gegen Querkräfte abstützt, wirkt das Stützelement einer bei entgegengesetzt wirkenden Querkräften möglichen Verformung des A-förmige Ständerwerks entgegen. Je nachdem auf welcher Seite des Innenlader-Transportfahrzeugs die Anlenkung des Stützelements erfolgt, wird es dabei auf Zug oder Druck belastet.

In einer bevorzugten Ausführungsform ist das Stützelement ein in sich unverstellbares Stützelement, das dass an der dem Andruckelement entgegen gesetzten Seite des Innenlader-Transportfahrzeugs zwischen dem L-Gestell, insbesondere dessen Rückseite, und der Seitenwand zur Anlage kommt. Das zwischen L-Gestell und Seitenwand angeordnete Stützelement kann so die entstehende Querkräfte aufnehmen und das L-Gestell an der Seitenwand des Innenladers abstützen. Zugleich ist es leicht und preiswert herzustellen. Eine Verstellmechanik ist für das Stützelement nicht erforderlich. Auf dieser Seite des Innenlader-Transportfahrzeugs kann somit auf die aufwändigen schwenkbeweglich gelagerten Andruckelemente verzichtet werden. Die beidseitige Sicherung gegen Querkräfte bleibt durch den Einsatz des erfindungsgemäßen Stützelements gewährleistet.

Der damit einhergehende Nachteil ist, dass die L-Gestell wie bereits dargestellt nur noch in einer Richtung in den Innenlader aufgenommen werden können. Sie müssen stets so ausgerichtet sein, dass die Anlagefläche des L-Gestells der Seite des Innenladers zugewandt ist, an der die schwenkbeweglich gelagerten Andruckelemente angelenkt sind.

Erfindungsgemäß wird das in sich unverstellbares Stützelement vor der Anlage des Andruckelements an der auf der den Glasscheiben entgegengesetzten Seite des L-Gestells zwischen dem L-Gestell und der Seitenwand des Innenlader-Transportfahrzeug angeordnet, so dass es das L-Gestell an der Seitenwand abstützt. Das Stützelement wird somit an seinem vorgesehenen Platz angeordnet, bevor auf der anderen Seite des L-Gestells das oder die Andruckelemente mit Druck auf die äußere Glasscheibe einwirken. Dies bietet den Vorteil, dass kein besonderer Kraftaufwand für das Einsetzen des Stützelements erforderlich ist.

Vorzugsweise ist das Stützelement über ein Haltemittel am L-Gestell oder an der Seitenwand des Innenlader-Transportfahrzeugs befestigt. Ein Haltemittel gewährieistet, dass das Stützelement auch in dynamischen Fahrsituationen nicht von seiner Position abweicht. Das Haltemittel kann in Form von klappbaren oder steckbaren mechanischen Anschlägen ausgebildet sein, die entweder am Gestell oder am Innenlader angebracht das Stützelement in der gewünschten Position fixieren. Von besonderem Vorteil ist es, wenn das Stützelement vor der Gestellaufnahme im Innenlader-Transportfahrzeug am L-Gestell befestigt wird. Die schon im Vorfeld des eigentlichen Ladevorgang erfolgte Befestigung beschleunigt das Beladen des Innenladers.

Ebenso ist es von Vorteil, wenn das Stützelement keilförmig ausgebildet ist. Ein keilförmiges Stützelement bietet nicht nur eine Sicherung gegen Querkräfte, sondern kann auch in gewissen Maße vertikal wirkende Kräfte ableiten. Von besonderem Vorteil ist es, wenn das Stützelement zwischen L-Gestell und der Seitenwand eingesteckt wird. Die hierfür erforderliche Haltung können besonders einfach durch Schienen gebildet werden, die an einer Seitenwand des Innenladers oder an dem rückwärtigem Schenkel des A-förmigen Ständerwerks befestigt sind und in die das Stützelement ohne Aufwand eingesteckt werden kann.

In einer besonders bevorzugten Ausführungsform besteht das Stützelement aus hochfestem Hartkunststoff, insbesondere aus faserverstärktem Kunststoff. Ein solches Stützelement ist im wesentlichen formstabil. Es gibt auch unter starker Belastung nicht nach und eignet sich damit in besonderen Maße, um das L-Gestell in Position zu halten.

In einer vorteilhaften Ausführungsform ist das Stützelement an einer Seitenwand eines Radkastens des Innenlader-Transportfahrzeugs angeordnet. Im Bereich der Radkästen des Innenladers ist der Laderaum schmaler als oberhalb von ihnen. Ein dort angeordnetes Stützelement kann entsprechend schmal ausgebildet sein. Es muss nur wenig Raum überbrücken, um sowohl am L-Gestell zur Anlage zu kommen und Kräfte an der Seitenwand des Innenladers ableiten zu können.

Vorzugsweise ist auf der selben Seite wie das unverstellbare Stützelement ein zweites Stützelement an dem L-Gestell und einer Seitenwand oder einer insgesamt horizontal ausgerichteten Fläche des Radkastens angeordnet, wobei das zweite Stützelement oberhalb des in sich unverstellbaren Stützelements, insbesondere oberhalb des Ladungsschwerpunktes, am L-Gestell angreift. Das zusätzlich an der selben Seite des Innenladers angeordnete zweite Stützelement verbessert dort die Ladungssicherung gegen Querkräfte. Da es oberhalb des in sich unverstellbaren Stützelements am L-Gestell angreift, stützt es insbesondere den oberen Abschnitt des A-förmigen Ständerwerks ab. Das zweite Stützelement ist leicht und einfach einzusetzen, da es ohne Pressung am Ständerwerk angesetzt wird. Es verhindert eine durch Querkräfte verursachte Verformung des oberen Bereichs des Ständerwerks. Hierdurch können im oberen Bereich des Ständerwerks auftretende Spannungsspitzen sicher abgefangen werden.

In einer bevorzugten Ausführungsform ist das zweites Stützelement eine, insbesondere in ihrer Längsrichtung verstellbare, Stange. Eine solche Stange lässt sich ohne großen Aufwand zwischen Innenlader- und L-Gestell einfügen. Ist sie verstellbar ausgebildet, kann ein und dieselbe Stange bei Gestelltypen mit unterschiedlicher Neigung des Ständerwerks eingesetzt werden.

Steht kein in sich unverstellbares Stützelement zur Verfügung, ist eine ordnungsgemäße Ladungssicherung nicht mehr möglich. Dies ist beispielsweise dann der Fall, wenn vergessen wurde, es nach der letzten Entladung mitzunehmen. Deshalb muss das in sich unverstellbare Stützelement verstaut werden, wenn es nicht in seiner Stützposition, also in Anlage an dem L-Gestell und der Seitenwand positioniert ist. Das in sich unverstellbare Stützelement benötigt also eine Ruheposition, in der es gehalten wird, wenn der Innenlader nicht beladen, beziehungsweise die aufgenommene Ladung noch nicht gesichert oder die Sicherung zur Entnahme der Ladung bereits wieder entfernt ist. In einer besonders bevorzugten Ausführungsform umfasst die Ladungssicherungs-Anordnung deswegen ein Haltemittel, welches das zweite Stützelement und das in sich unverstellbare Stützelement miteinander verbindet.

Das Haltemittel ermöglicht es, das in sich unverstellbare Stützelement auf einfache Weise in die Ruheposition zu bewegen. Wird das zweite Stützelement von seiner Angriffs-Position am L-Gestell in eine Position geschwenkt, in der es nahe der Seitenwand des Innenladers angeordnet ist, so wird das in sich unverstellbare Stützelement von dem Haltemittel mitgenommen und ebenfalls in eine Position nahe der Seitenwand verschwenkt. Falls gewünscht kann es hier für Leerfahrten des Innenladers auch befestigt werden. Ein besonderer Vorteil besteht darin, dass das in sich unverstellbare Stützelement von dieser Ruheposition ohne großen Aufwand wieder zurückgeführt werden kann. Wird das zweite Stützelement wieder in eine Angriffs-Position verschwenkt, folgt auch das mit ihm verbundene in sich unverstellbare Stützelement steht für eine Anlage am L-Gestell und der Seitenwand wieder zur Verfügung.

Vorteilhafterweise ist das in sich unverstellbare Stützelement einteilig ausgebildet. Die einteilige Ausgestaltung des Stützelements erleichtert seine Handhabung. Es ist zudem durchaus möglich, auf der jeweiligen Seite nicht nur mehrere schwenkbewegliche Arme, sondern auch mehrere Stützelemente vorzusehen.

In einer alternativen Ausführungsform der erfindungsgemäßen Ladungssicherungs-Anordnung wird auf eines oder beide der auf Druck belasteten Stützelemente verzichtet. Das wegfallende Stützelement wird durch ein auf Zug belastbares Stützelement ersetzt, beispielsweise eine Stange oder ein Seil. Das oder die Stützelemente werden an der selben Seite des Innenlader-Transportfahrzeugs, an der auch die Andruckelemente angeordnet sind, befestigt. An seinem entgegen gesetzten Ende wird das Verbindungselement mit dem A-förmigen Ständerwerk des L-Gestells verbunden. Bei in Richtung der gegenüberliegenden Seite des Innenlader-Transportfahrzeugs wirkenden Querkräften wird das Verbindungselement auf Zug belastet und hält das A-förmige Ständerwerk in Position. Diese alternative Ausführungsform ist ebenfalls einfach und leicht zu bedienen. Sie ist im Vergleich zu einer ansonsten erforderlichen beidseitigen Anordnung von Andruckelementen ebenfalls gewichtssparend wie auch kostengünstig.

Zwei Ausführungsformen der Erfindung werden anhand zweier Zeichnungen näher erläutert. Dabei zeigen
- Figur 1: eine schematische Darstellung einer Ausführungsform der Erfindung und
- Figur 2: eine schematische Darstellung einer zur Figur 1 alternativen Ausführungsform der Erfindung

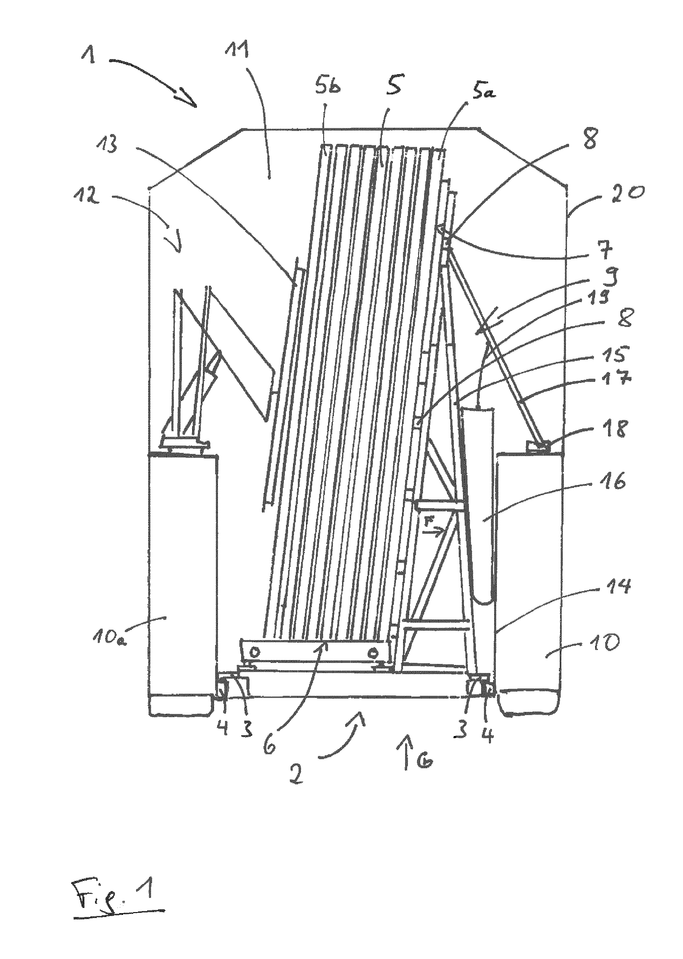

Eine bevorzugte Ausbildungsform wird anhand der Figur 1 beispielhaft erläutert. Dabei zeigt die Figur 1 eine schematische Darstellung eines in einen des Innenlader-Transportfahrzeug 1, im weiteren als Innenlader bezeichnet, aufgenommenen L-Gestells 2. Das L-Gestell 2 liegt mit seinen Schienen 3 auf den Ladeschienen 4 des Innenladers 1 auf. Eine Mehrzahl von Glasscheiben 5 steht aufrecht auf der Auflagefläche 6 des L-Gestells 2 auf. Eine innere Glasscheibe 5a liegt an einer Anlagefläche 7 des L-Gestells 2 an, während sich die weiteren Glasscheiben jeweils an der nächst-inneren Glasscheibe abstützen. Die Anlagefläche 7 wird im wesentlichen aus Quertraversen in Form von horizontal verlaufenden Riegeln 8 gebildet, die von einem insgesamt A-förmigen Ständerwerk 9 gehalten werden.

Der Innenlader 1 weist jeweils seitlich zwei Radkästen 10, 10a auf, die in die Ladefläche 11 des Innenladers 1 hereinragen. Auf einem der Radkästen 10a ist ein schwenkbeweglich gelagerter Arm 12 angelenkt, der an seinem entgegengesetzten Ende mit einer Andruckplatte 13 verbunden ist. Auf der dem schwenkbeweglich gelagerter Arm 12 entgegengesetzten Längsseite des Innenladers 1 ist zwischen einer Seitenwand des Innenladers 1 in Form der Seitenwand 14 des Radkastens 10 und des rückseitigen, also den Glasscheiben 5 abgewandten Schenkels 15 des Ständerwerks 9 ein keilförmiges, in sich unverstellbares Stützelement 16 angeordnet. Das Stützelement 16 liegt sowohl an dem Schenkel 15 wie an der Innenseite 14 an und kann die vom Schenkel 15 des L-Gestells 2 auf ihn übertragenen Querkräfte F sowie in gewissen Maße auftretende horizontal wirkende Kräfte G aufnehmen und an die Seitenwand des Innenladers übertragen.

Oberhalb des in sich unverstellbaren Stützelements 16 greift eine zweites Stützelement 17 in Form einer Stange am A-förmigen Ständerwerk 9 an. Die Stange liegt oberhalb des Ladungsschwerpunktes L-förmig an einem der horizontal verlaufenden Riegel 8 an. An ihrem entgegengesetzten Ende stützt sie sich im Bereich des Radkastens 10 an einer Halfenschiene 18 ab.

Das in sich unverstellbare Stützelement 16 ist über ein Haltemittel 19 in Form eines Drahtes mit dem zweiten Stützelement 17 verbunden. Wird das zweite Stützelement 17 in eine Position nahe einer oberen Seitenwand 20 des Innenladers 1 verschwenkt, nimmt es über das Haltemittel 19 das in sich unverstellbare Stützelement 16 mit und hält es an der Seite des Innenladers 1. Wird das zweite Stützelement 17 in Richtung eines in den Innenlader aufgenommenen L-Gestells 2 verschwenkt, folgt auch das in sich unverstellbare Stützelement 16 und kann zwischen Seitenwand 14 und L-Gestell 2 zur Anlage gebracht werden. Somit lassen sich das unverstellbare Stützelement 16 und das zweite Stützelement 17 manuell bedienen, ein Antrieb ist nicht erforderlich.

Nach der Anlage des in sich unverstellbaren Stützelements 16 und bei der gegebenen Ausführungsform des zweiten Stützelements 17 wird die schwenkbeweglich gelagerte Andruckplatte 13 gegen die äußere Glasscheibe 5b der auf dem L-Gestell gelagerten Glasscheiben 5 gefahren und dort angepresst. Wird bei an der äußeren Glasscheibe 5b angelegtem Andruckelement 13 Druck auf dieses gegeben, wirkt das in sich unverstellbare Stützelement 16 sowie das zweite Stützelement 17 als Widerlager, so dass die Glasplatten 5 und das L-Gestell 2 zwischen der Andruckplatte 13 und den Stützelementen 16, 17 eingeklemmt sind.

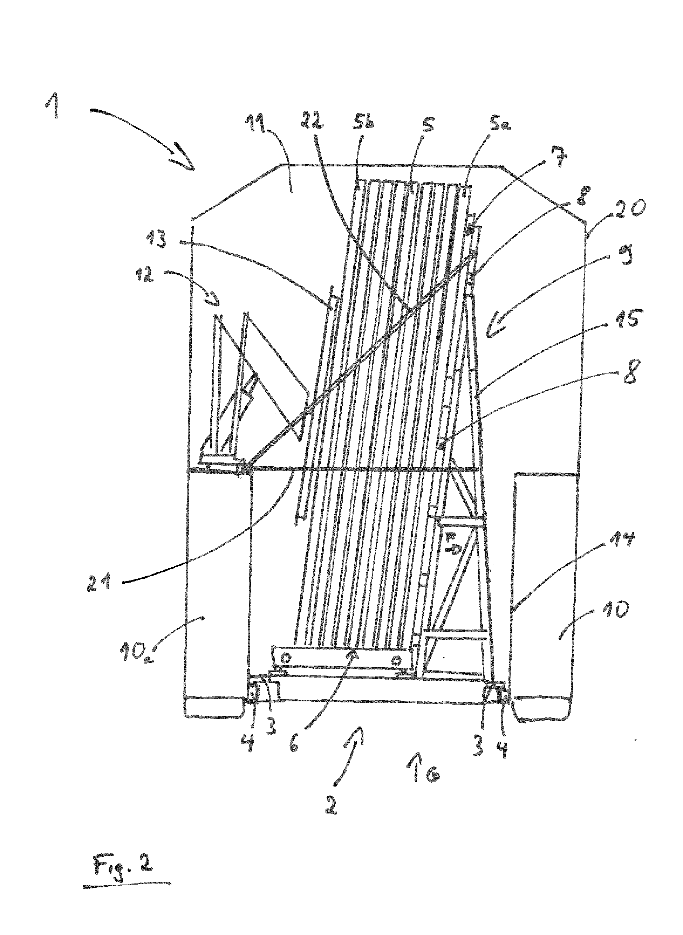

Ein Beispiel der alternativen Ausführungsform wird in Figur 2 gezeigt. Dabei wird auf die aus Figur 1 übernommenen und dort bereits beschriebenen Elemente Bezug genommen und nur die Unterschiede erläutert. Anstelle des in sich unverstellbares Stützelements 16 ist ein auf Zug belastbares Stützelement 21 vorgesehen, welches das A-förmige Ständerwerk 9 mit dem Radkasten 10a verbindet. Das auf Zug belastbare Stützelement 21, beispielsweise ein Seil oder eine, insbesondere längenverstellbare Stange, wird über jeweils geeignete Befestigungsmittel mit dem A-förmigen Ständerwerk 9 und dem Radkasten 10a verbunden, Ein zweites auf Zug belastbares Stützelement 22 ersetzt auf gleiche Weise das Stützelement 17. Wirken Querkräfte F auf das L-Gestell 2, werden die Stützelemente 21, 22 auf Zug belastet und verhindern ein zu starkes Verbiegen des A-förmigen Ständerwerks 9.

Die erläuterten Ausführungsformen sind nicht auf die in den Figuren beschriebenen Positionierung der Elemente beschränkt. Im dem von der Erfindung gesetzten Rahmen können sie natürlich auch an anderen geeigneten Positionen angeordnet oder angebracht werden.

## Patentansprüche

1. Ladungssicherungs-Anordnung in einem Innenlader-Transportfahrzeug (1) zum Sichern aufrecht in einem L-Gestell (2) stehender Glasscheiben (5, 5a, 5b) gegen beim Transport auftretende Querkräfte (F), umfassend zumindest ein seitlich im Innenlader-Transportfahrzeug (1) angeordnetes und schwenkbeweglich gelagertes Andruckelement (13), welches zwischen einer Nullstellung und einer Maximal-Stützstellung beweglich vorgesehen ist,
**dadurch gekennzeichnet,**
**dass** alle schwenkbeweglich gelagerten Andruckelemente (13) auf derselben Seite des Innenlader-Transportfahrzeugs (1) angeordnet sind und dass an der dem Andruckelement (13) entgegengesetzten Seite des L-Gestells (2) zwischen dem L-Gestell (2) und einer Seitenwand (14, 20) des Innenlader-Transportfahrzeugs (1) ein Stützelement (16) angeordnet ist.

2. Ladungssicherungs-Anordnung nach Anspruch 1,
**dadurch gekennzeichnet,**
**dass** das Stützelement ein in sich unverstellbares Stützelement (16) ist, wobei das in sich unverstellbare Stützelement (16) an der dem Andruckelement entgegen gesetzten Seite des Innenlader-Transportfahrzeugs zwischen dem L-Gestell (2) und der Seitenwand (14, 20) zur Anlage kommt.

3. Ladungssicherungs-Anordnung nach Anspruch 2,
**dadurch gekennzeichnet,**
**dass** das in sich unverstellbare Stützelement (16) über ein Haltemittel am L-Gestell (2), oder an der Seitenwand (20) beziehungsweise einem Radkasten (10) des Innenfader-Transportfahrzeugs (1) befestigt ist.

4. Ladungssicherungs-Anordnung nach Anspruch 3,
**dadurch gekennzeichnet,**
**dass** das in sich unverstellbare Stützelement (16) keilförmig ausgebildet ist.

5. Ladungssicherungs-Anordnung nach einem der Ansprüche 1 bis 4,
**dadurch gekennzeichnet,**
**dass** das in sich unverstellbare Stützelement (16) an einer Seitenwand (14) eines Radkastens (10) der gegenüberliegenden Seite des Innenlader-Transportfahrzeugs (1) angeordnet ist.

6. Ladungssicherungs-Anordnung nach der vorangegangenen Ansprüche,
**dadurch gekennzeichnet,**
**dass** das Stützelement (16) aus Hartkunststoff, insbesondere aus faserverstärktem Kunststoff, besteht.

7. Ladungssicherungs-Anordnung nach einem der vorangegangenen Ansprüche, **dadurch gekennzeichnet,**
**dass** das in sich unverstellbare Stützelement (16) an einer Innenwand (14) eines Radkastens (10) der gegenüberliegenden Seite des Innenlader-Transportfahrzeugs (1) und einem den Glasscheiben (5) abgewandten Schenkel (15) des L-Gestells (2) anliegt.

8. Ladungssicherungs-Anordnung nach Anspruch 7,
**dadurch gekennzeichnet,**
**dass** ein zweites Stützelement (17) an dem L-Gestell (2) und einer Seitenwand (20) oder dem Radkasten (10) des Innenlader-Transportfahrzeugs (1) angeordnet ist, wobei das zweite Stützelement (17) oberhalb des in sich unverstellbaren Stützelements (16) am L-Gestell (2) angreift.

9. Ladungssicherungs-Anordnung nach Anspruch 8,
**dadurch gekennzeichnet,**
**dass** das zweite Stützelement (17) eine, insbesondere in ihrer Längsrichtung verstellbare, Stange ist.

10. Ladungssicherungs-Anordnung nach Anspruch 8 oder 9,
**dadurch gekennzeichnet,**
**dass** ein Haltemittel (19) das zweite Stützelement (17) und das in sich unverstellbare Stützelement (16) miteinander verbindet.

11. Ladungssicherungs- nach Anspruch 1
**dadurch gekennzeichnet,**
**dass** das Stützelement ein auf Zug belastbares Stützelement (21, 22) ist, wobei das auf Zug belastbare Stützelement (21, 22) an dem L-Gestell (2) und der Seitenwand (23) oder dem Radkasten (10a) auf derselben Seite wie die schwenkbeweglich gelagerten Andruckelemente (13) angelenkt ist.

12. Ladungssicherungs-Anordnung nach Anspruch 11,
**dadurch gekennzeichnet,**
**dass** das auf Zug belastbare Stützelement (21, 22) ein Seil oder eine, insbesondere in ihrer Längsrichtung verstellbare, Stange ist.

13. Innenlader-Transportfahrzeug mit einer Ladungssicherungs-Anordnung gemäß einem der vorangegangenen Ansprüche

14. Verfahren zur Ladungssicherung in einem Innenfader-Transportfahrzeug (1), wobei das Innenlader-Transportfahrzeug (1) unter ein mit aufrecht stehenden Glasscheiben (5, 5a, 5b) beladenes L-Gestell (2) fährt und dieses anhebt, wobei ein oder mehrere seitlich im Innenlader-Transportfahrzeug (1) angeordnete und schwenkbeweglich gelagerte Andruckelemente (13), welche zwischen einer Nullstellung und einer Maximal-Stützstellung beweglich vorgesehen ist, seitlich gegen die Glasscheiben (5, 5a, 5b) gefahren und an der äußeren Glasscheibe (5b) des L-Gestells (2) in Anlage gebracht werden,
**dadurch gekennzeichnet,**
**dass** vor der Anlage des Andruckelements (13) ein in sich unverstellbares Stützelement (16) an der auf der den Glasscheiben (5, 5a, 5b) abgewandten Schenkel (15) des L-Gestells (2) an dem L-Gestell (2) und einer Seitenwand (14) des Innenlader-Transportfahrzeugs (1) zur Anlage gebracht wird, so dass es das L-Gestell (2) an der Seitenwand (14) abstützt.

15. Verfahren nach Anspruch 14,
**dadurch gekennzeichnet,**
**dass** das in sich unverstellbare Stützelement (16) vor der Gestellaufnahme im Innenlader-Transportfahrzeug (1) am L-Gestell (2) befestigt wird.
